(19) **Europäisches Patentamt**
**European Patent Office**
**Office européen des brevets**

(11) **EP 4 703 989 A1**

(12) **EUROPEAN PATENT APPLICATION**

(43) Date of publication:
**04.03.2026 Bulletin 2026/10**

(21) Application number: **24197414.6**

(22) Date of filing: **29.08.2024**

(51) International Patent Classification (IPC):
**G06Q 10/0631** (2023.01)    **G06Q 30/0204** (2023.01)
**G06Q 10/047** (2023.01)

(52) Cooperative Patent Classification (CPC):
**G06Q 10/0631; G06Q 30/0205;** G06N 10/60;
G06Q 10/047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
• **Awasthi, Abhishek**
**67061 Ludwigshafen am Rhein (DE)**
• **Pitz, Hans-Joachim**
**67098 Bad Duerkheim (DE)**
• **Becker, Ferdinand Jakobus**
**67056 Ludwigshafen am Rhein (DE)**
• **Lee, Sangbum**
**New Jersey, 07932 (US)**

(74) Representative: **BASF IP Association**
**BASF SE**
**GBI - Z078**
**67056 Ludwigshafen (DE)**

(54) **METHOD FOR CONTROLLING AND/OR MONITORING A PRODUCT FLOW**

(57)      The invention refers to a method for assisting in controlling a product flow. A user geolocations and production site geolocations are received. Quantum computer control data for controlling a quantum computer is generated for performing a quantum computation for the determination of product distribution clusters based on the user geolocations and the production site geolocations. A product distribution cluster represents a cluster of product users associated with a product producer of a product. A result of the quantum computation is received and the product distribution clusters are generated based on the result. The generated product distribution clusters are provided for assisting in controlling a product flow from a product producer to a product user.

FIG.9

EP 4 703 989 A1

**Description**

FIELD OF THE INVENTION

The invention relates to a method, an apparatus and a computer program product for assisting in controlling and/or monitoring a product flow of a product for a production site to a product user. Further, the invention refers to a computer implemented method, apparatus and computer program product for controlling and/or monitoring a product flow. Moreover, the invention refers to a quantum computer interfacing method, apparatus and computer program product for interfacing with a quantum computer for assisting in the controlling and/or monitoring of a product flow.

BACKGROUND OF THE INVENTION

Today, in the modern chemical industries, controlling and/or monitoring product flows from a plurality of sources from product producers to product users in order to facilitate the production of a product is a complex task. In particular, optimizing the controlling and/or monitoring of the product flow allows to archive goals like minimizing the environmental impact of the product flow, optimizing the production process and timing, etc.

SUMMARY OF THE INVENTION

In the modern chemical industries, the production processes are very complex and in nearly all cases involve the utilization of a plurality of products and pre-products that have to be provided to a production site with the right amount and the right timing. This leads to a complex network of product flows from product producers that produce a product at one or more production sites to respective product users that utilize the product to produce other products that again are then provided to a product user.

Controlling and/or monitoring a product flow in this network of product flows is a challenging task, in particular, if additional objectives are to be taken into account like reducing an environmental impact of the product flows, reducing waste production by utilizing the waste of one production as input to another production, optimizing the amount of utilized product and the timing of product flows, etc. Moreover, the delivery of products is often initiated based on current demand and thus the controlling and/or monitoring has to be performed in real time. Thus, it is an object of the present invention to provide a method that allows for an efficient, i.e. computer resource preserving, and fast method for improving, in particular, optimizing, a controlling and/or monitoring of a product flow from a product producer to a product user. In particular, it is an object of the present invention to assist in controlling and/or monitoring of a product flow such that the environmental impact of the product flow can be reduced.

Since a quantum computer is utilized for generating a product distribution cluster associated based on product producer geolocations and product user geolocations, product distribution clusters can be determined based on a respective big dataset comprising a higher amount of geolocations than would be possible utilizing classical computer. Generally, the more geolocations are taken into account the more can the product flow be optimized for all product users. Further the quantum computer allows to take more optimization goals into account than a classical computer leading to a further improvement of the product flow. Moreover, generating product distribution clusters allows to pool product users and product producers based on respective geolocations which allows for an effective product flow from the product producer to the product user. Thus combining a quantum computer with generating a product distribution cluster allows to control and/or monitor the product flows such that a product flows in the most efficient way from the product producer to the product user. In particular, an environmental impact of the product flow can be reduced when utilizing product distribution clusters that are associated with the respective product producer.

Thus, in a first aspect, a computer implemented method is presented for assisting in controlling and/or monitoring a product flow of a product from a product producer to a product user, wherein the method comprises a) receiving product user geolocations and production site geolocations for a product, wherein the production site geolocation are indicative of the geographical locations of one or more production sites producing the product and the product user geolocations are indicative of the geographical locations of one or more product users, b) generating quantum computer control data for controlling a quantum computer for performing a quantum computation for the determination of one or more product distribution clusters based on the product user geolocations and the production site geolocations, wherein a product distribution cluster represents a cluster of product users associated with a product producer of a product, c) receiving a result of the quantum computation and generating the one or more product distribution clusters based on the result, and d) providing the one or more generated product distribution clusters for assisting in controlling and/monitoring a product flow from a product producer to a product user.

The computer implemented method can be realized in form of any computer program performed by a general or dedicated software and/or hardware comprising one or more processors that are configured accordingly. In particular, the computer implemented method can also be realized in form of distributed computing in which one or more functions of the method are distributed over different computers or computer systems, for instance, in a cloud computing or a network computing environment. The computer implemented method is configured for assisting in controlling and/or monitoring a product flow of a product from a product producer to a product user. The controlling and/or monitoring can encompass any action that allows to influence the product flow, direct the product flow, verify the product flow or inform about one or more aspects of the product flow, for instance, a location, timing, etc.

The product can be any product that is produced in an industrial production process. The product can be a chemical product that is produced in the chemical industries. The product can be a pre-product for another product, a product that is utilized in another production process or an end consumer product. In this context, the product producer refers to a producer of the respective product, wherein the product producer can be represented by a production site at which the product is produced. The product user refers to a user of the product that intends to utilize the product in an industrial process or as an end consumer.

The product flow can comprise any kind of movement of the product from the product producer to the product user. For example, the product flow can refer to a transportation of the product utilizing any kind of transportation means in a shipping process. However, the product flow can also refer to the flow of a product through a pipeline or other means that allows for the product to flow to the user. For example, a product producer and a product user can also be part of the same production site, wherein one part of the production site produces the product and another part of the production site uses the product. However, the product producer and the product user can also be completely separate entities or belong to the same company.

The method comprises receiving product user geolocations and production site geolocations. The receiving can comprise accessing a database on which the geolocations are already stored and providing the geolocations for further processing. The receiving can comprise receiving a selection of geolocations and accessing the selection of geolocations on a database and providing the same. The receiving can comprises receiving the geolocations from a user interface on which a user can input or otherwise indicate the geolocations.

The method comprises generating quantum computer control data for controlling a quantum computer for performing a quantum computation for the determination of the product distribution clusters. A quantum computer refers to a computer that uses quantum effects, such as superposition and entanglement to perform certain computations more effectively than classical digital computers. A quantum computer comprises quantum elements that are manipulated in a controlled manner to perform quantum computations. The term "quantum element" may refer to the fundamental building blocks of a quantum computer. In the context of quantum computing, these elements may be commonly known as qubits. Qubits may be the quantum analogue to a classical bit. While classical bits can represent either a 0 or a 1, qubits may exist in a superposition of both states simultaneously, thanks to the principles of quantum mechanics. Qubits may be realized using various physical systems, such as atoms, ions, superconducting circuits, or photons. These physical systems may provide a way to manipulate and measure the quantum state of a qubit.

The control data can refer to any data that allows to initiate and/or perform a quantum computation on a quantum computer. For example, the control data can directly comprise the quantum operations to be applied to the quantum elements during the computation. However, the control data can also comprise the respective computational problem to be computed by the quantum computer, wherein the translation into the quantum operations and manipulations can be performed by a control system of the quantum computer itself. Since the network of product flows, the number of product users and the number of product producers in the network can be high, for example, a view thousand, utilizing a quantum computation instead of a classical computation has the advantage that the respective problem of determining the product distribution clusters can be performed in a fast and computationally effective manner. Moreover, utilizing a quantum computer allows to take a plurality of additional objectives when determining the distribution clusters into account.

The method comprises receiving the result of the quantum computation and generating the one or more product distribution clusters based on the result. The result can be any representation of the quantum computation that is indicative of the one or more product distribution clusters and thus allows to derive the one or more product distribution clusters, For instance, the result can refer to the solution of a problem that provides one or more parameters or quantities that allow to generate the product distribution center. The result can refer directly to a representation of the product distribution clusters and the generating of the product distribution clusters can refer in this case to simply accessing the representation.

A product distribution cluster represents a cluster of product users associated with at least one product producer of a product. The product distribution cluster can pool product users that, from the viewpoint of an associated product producer, can be treated, with respect to the product flows, in the same way. Further, the association of a product producer to a cluster of product users allows to optimize the respective product flows. For example a product producer that is next to a product distribution cluster can be associated with the respective cluster to minimize transportation resources.

The product distribution cluster is determined based on product producer geolocations and product user geolocations. The product producer geolocation, which can be regarded as a geolocation of the production site or product storage of the product producer, is indicative of the geographical location of the product producer. The product distribution cluster can be represented by a geolocation of a product distribution cluster center. This center geolocation can be a product user geolocation of a product user lying next to the geographical center of the cluster of product users. The product distribution cluster center can be associated with a product distribution facility. A product distribution facility can be a product storage at which one or more products are stored for being distributed to the product users of the product distribution cluster. A product distribution facility can be provided by a product user geolocation, if it refers also to the product distribution cluster center, or can be built within a predetermined distance to a determine product distribution center geolocation. All product users of a cluster can be associated to the product distribution cluster center and can be represented by the center geolocation. The generating of the product distribution cluster can comprise generating a center geolocation and the product users and/or product user geolocations and/or the production sites and/or production sites geolocations that are associated with the center geolocation. For different products different product distribution clusters can be generated due to possible different geolocations of the production sites for different products.

In an embodiment, the quantum computer control data comprises at least a part of an optimisation problem, wherein the optimisation problem is defined to determine as optimization result the one or more product distribution clusters based on the user geolocations and the producer geolocations, wherein the quantum computer control data is configured to cause the quantum computer to perform a quantum computation of the optimization problem. The optimization problem can be provided together with the product user and production site geolocations. The optimization problem can be defined after receiving the product user and production site geolocations, for example, based on a predefined mathematical class of optimization problems.

An optimization problem refers to an optimization, i.e. minimizing or maximizing, of a functional relation between different quantities. The respective quantities can refer to variables that can be varied during the optimization of the problem. Further, the quantities can refer to fixed or predetermined quantities that are not varied during the optimization of the problem. Moreover, the quantities can further refer to one or more quantities which are minimized or maximized during the optimization of the problem referred to as optimization quantities. In particular, the optimization of the optimization problem is performed with respect to one or more variables, i.e. with respect to one or more quantities that can be varied during the optimization in order to minimize or maximize the respectively to be optimized quantity. Such a variable can refer to a scalar variable, i.e. to a quantity that can take on only one value at a time, or can refer to a higher-dimensional variable, in particular, to a set of scalar quantities that can take on one value at a time, for instance, can refer to a vector or a matrix. Moreover, the variable can refer also to a part of a higher-dimensional quantity, for instance, can refer to one or more scalar quantities of a matrix or vector. Generally, the optimization problem can be provided such that the respective variables of the optimization problem can take on any value. However, in a preferred embodiment, the optimization problem is adapted such that the one or more variables are binary variables, i.e. can only take on two values, for example, the values 0 and 1 or 0 and -1 or 1 and -1. This is particularly preferred since the optimization problem is at least partly calculated on a quantum computer. In a more general case, it is preferred that the optimization problem is adapted such that the variables can take on any integer value. The one or more optimal target quantities in particular refer to one or more of the variables of the optimization problem that are varied during the optimization of the optimization quantity or to the one or more optimization quantities after the optimization. Thus, the variables can be regarded as referring to the values of one or more variables or one or more optimization quantities at the end of the optimization process. The variables can be indicative of whether or not a product user is associated with a product distribution cluster, a product user and/or a product distribution cluster center. The variables can be a geolocation of a product distribution center. The fixed quantities can be the user and the production site geolocations or representations of the user and the production site geolocations or representations. The optimization quantities can be associated with one or more objectives of the optimization.

The optimization problem can be defined based on the product user geolocations and the product producer geolocations to determine the product distribution clusters. For example, for determining the product distribution clusters, product distribution cluster centers can be determined and respective product users and product producers can be associated to the determined product distribution cluster centers. However, the product distribution clusters can also be determined without determining a product distribution cluster center, for instance, by determining the product users associated with the product distribution cluster and an associated product producer. The control data for controlling the quantum computer can comprise the optimization problem and can be configured to control the quantum computer for optimizing the optimization problem and receiving the optimization result from the quantum computer indicative of the product distribution clusters.

In an embodiment, the generation of the product distribution clusters based on the product user geolocations and product producer geolocations is based on one or more objectives associated with the product user geolocations and the product producer geolocations. The optimization problem can comprise the objectives defined as part of an optimization problem used for determining the distribution clusters. However, the objectives can also be taken into account in other ways, for instance, by adapting already determined product distribution clusters with respect to the objectives. Preferably, an objective comprises determining the distance between product users based on the product user geolocations and minimizing the distance between product users associated with a product distribution cluster. For example, the optimization quantity can be the distance between product users associated with a product distribution cluster. This allows to pool product user that are geographically located in the region into a product distribution cluster. This allows to provided control data that is specifically configured to control and/or monitoring the product flow in the respective region.

It is preferred, that an objective refers to minimizing a total number of product distribution clusters. For example, the optimization quantity can be the total number of product distribution clusters. In a preferred embodiment, an objective comprises determining distances between a) product producer geolocations and distribution cluster geolocations, and b) product user geolocations and product producer geolocations and minimizing a relation of the distances. For example, the optimization quantity can be the relation of the distance. A product distribution cluster geolocation refers to a geolocation that represents the product distribution cluster and preferably is located within the region of the product distribution cluster defined by the product users of the product distribution cluster. The product distribution cluster geolocation can be the product distribution cluster center geolocation. This objective allows to minimize the distance between the product producer associated with a product distribution cluster, but also to avoid product user association with a distribution cluster that are much further away from the distribution cluster than all other product users associated with the distribution cluster. Thus the product distribution cluster can be limited to a geographically compact region.

In a preferred embodiment, an objective refers to minimizing a distance between a product distribution cluster geolocation and product user geolocations of product users associated with the product distribution cluster. For example, the optimization quantity can be the distance between a product distribution cluster geolocation and product user geolocations of product users associated with the product distribution cluster. Also this objective allows to limit the product distribution cluster to a geographically compact region In a further embodiment, an objective refers to associating product users with a product distribution cluster that are located in the same administrative region. This allows to generate the same control data for the product users of the respective distribution clusters with respect to the controlling and/monitoring of administrative processes of the product flow.

In a further embodiment, an objective refers to assigning a product user to exactly one distribution cluster. This allows to keep the association between product user, distribution cluster and product producer unique and thus allows to also associate respective unique control data to the distribution cluster.

In an embodiment, the generation of the product distribution clusters is further based on one or more additional objectives that are associated with the environmental impact of the product flow. For example, the objective can refer to determining the product distribution clusters such that during the product flow the $CO_2$ emissions are minimized.

In an embodiment, the optimization problem comprises an interaction part, wherein the interaction part is indicative of a two-way or multi-way interaction between two or more variables of the optimization problem, wherein the quantum computer control data comprises the interaction part of the optimization problem. The interaction part can be provided or defined together with the optimization problem. The method can comprise deriving the interaction part for instance, from the optimization problem. In particular, the interaction can also be between variables of a variable set, for example, between quantities within a vector or matrix forming a variable of the optimization problem. Generally, the interaction in the interaction part is quantifiable by an interaction parameter. In particular, the interaction parameter can be indicative of the kind of interaction and/or of the strength of the interaction between specific variables of the optimization problem. Generally, also more than one interaction parameter can be utilized to quantify the interaction in the interaction part, for instance, different interactions of the variables can be quantified by different interaction parameters. In particular, the interaction parameter can also take the form of a vector, matrix or tensor, or even higher dimensional objects.

In an embodiment, the optimization problem comprises an influence part indicative of an influence on one or more variables of the optimization problem, wherein the quantum computer control data comprises the influence part of the optimization problem. Generally, the influence can refer to any influence on one or more respective variables that is not caused by the interaction with another of the one or more variables. In particular, it is preferred that the influence refers to an external influence, i.e. an influence affecting one or more variables but not being caused by any one of the other variables of the optimization problem. However, in some optimization problems the influence can also be an internal influence, i.e. an influence affecting one or more variables and being caused, for example, by the interaction of one or more other variables of the optimization problem with each other, wherein the internal influence does not refer to a direct interaction of the respective variables.

In an embodiment, the method can further comprise a) receiving a product request of a product user indicating a product to be provided to the product user and a product user geolocation, b) determining for the product user a distribution cluster associated with the product user based on the product user geolocation, and c) generating control data for controlling and/or monitoring a product flow from a product producer to the product user based on the determined distribution cluster and based on the user request.

The request can be received by any communication pathway. For example, the request can be received from a product user via a user interface that allows a user to input a respective request. However, the request can also be stored on a database already and can be provided automatically, for instance, based on a respective trigger event. Such trigger events can refer to a product being out of stock or a bill of materials indicating that the product is needed for producing another product, etc.

The product request can be received in any digital format that is indicative of the product to be provided and the product producer geolocation. For example, the product request can be provided as a product request ID that is associated with the respective product user and a respective product, wherein the user geolocation can be stored on a database in association with the product user or the product request ID. The product request can directly comprise the product, for example, as a product digital representation like a product ID, to be provided and/or the user geolocation. However, the product request can also be indicative of the product to be provided and the user geolocation. For example, if the product request indicates the product user and the geolocation of the product user is known, for instance, stored on a database, the user geolocation can be derived from the product request. The product user geolocation is indicative of the geographical location of the product user. The geographical location refers to a digital representation of the geographical location of the product user, for instance, in form of coordinates, an address, a relation to a known other location, etc.

In a further step, a product distribution cluster is determined based on the user request. The product distribution center to be determined is associated with the product user. The determining of the product distribution cluster based on a user request can comprise accessing a database on which the product users associated with a center geolocation are stored and determining the respective center geolocation that represents the cluster to which the product user belongs. For different products different product distribution clusters can be provided due to possible different geolocations of the product producers for different products. Thus, the determining of the product distribution cluster associated with the product user can also utilize information provided by the user request with respect to the product to determine the product distribution cluster of the product user for a respective product. Furthermore, if a product user is not yet part of a product cluster, a product user geolocation provided by the request can be utilized to determine based on the user geolocation and the geolocations of other product users associated with respective product distribution clusters a product distribution cluster to which the product user belongs. For example, it can be determined which already known product user has a geolocation next to the new product user geolocation and the new product user can then be associated with the product distribution cluster of the known product user next to the new product user.

In a further step, control data for controlling and/or monitoring a product flow from a product producer to the product user is generated based on the determined distribution cluster and based on the user request. The control data can refer to any data from which controlling and/or monitoring actions can be derived that are associated with the product flow. The generated control data can be implemented into a respective product flow controlling system that controls and/or monitors one or more product flows and provides, for instance, a user interface or operator interface that allows a user or an operator to interact with the controlling system. The control data can comprise initiating the product flow from the product producer associated with the determined distribution cluster of the product user to the product user. For example, the control data can comprise data that allows to derive a controlling action of opening a valve of a pipeline that leads to a product flow from the respective product producer associated with a determined distribution cluster to the product user. In another example, other transportation means can be utilized, for example, transport vehicles, transportation belts, etc. Further, the control data can comprise control data for controlling and/or monitoring further details of the product flow like the amount of product provided to the product user, the timing of providing the product to the product user, the transportation means for transporting the product to the product user, etc., which can be determined based on further information provided by the user request. The control data can also be generated based on the distribution cluster by utilizing predetermined rules for the control data that are associated with the respective distribution cluster. For example, a determined distribution cluster can be stored in association with respective control data or part of the control data that can then be utilized for generating the control data. The determined distribution cluster can determine one or more aspects of the controlling and/or monitoring caused by the control data. For example, the controlling and/or monitoring can comprise preparing a container shipping and monitoring of a container ID, if the product distribution cluster is located on a different continent than the product producer such that the shipping has to be performed by container. In other examples, the product distribution cluster can determine which pipeline is to be used and monitoring the respective transfer of the product via the pipeline. In a further example, if the product distribution cluster center is associated with a product distribution facility, the generating of the control data can based further on the product distribution facility. For example, the control data can comprise controlling a product flow such that it is provided from the product producer to the product user via the product distribution facility. This allows, for example, to first store one or more products at the product distribution facility and then optimize the transport from the product distribution facility to the product users.

In an embodiment, the method further comprises, if the product user meets a predetermined criteria, a) receiving further product producer geolocations and product user geolocations including the product user geolocation, b) generating one or more product distribution clusters based on the product producer geolocations and product user geolocations, and c) providing the generated product distribution clusters and associated product users and d) determining the product distribution cluster for the product user based on the generated product distribution clusters. The criteria can refer to any criteria that indicate that the already generated product distribution clusters do not allow to associate the product user with a respective product distribution cluster. For example, the criteria can be associated with a product user geolocation. In this case the criteria can refer to any of the objectives described above related to the product user geolocation. Also more simple criteria can be utilized, like a distance threshold, wherein if the distance between the product user geolocation and the next product producer geolocation or the next product user geolocation is above the distance threshold, respective new distribution clusters are to be determined.

In a further aspect of the invention, a computer implemented method is presented for controlling and/or monitoring a product flow of a product from a production site to a product user, wherein the apparatus comprises one or more processor for performing a method comprising a) receiving a product request of a product user indicating a product to be provided to the product user and a product user geolocation, wherein the product user geolocation is indicative of the geographical location of product user, b) determining a product distribution cluster associated with the product user based on the product user geolocation and based on one or more product distribution clusters generated as described above, and c) generating control and/or monitoring data for controlling a product flow from a production site to the product user based on the determined distribution cluster.

In a further aspect of the invention a method is presented, wherein the method comprises a) performing the steps of the method for assisting in controlling and/or monitoring a product flow of a product from a product producer to a product user as described above to generate one or more product distribution clusters, and b) performing the method for controlling and/or monitoring a product flow of a product from a product producer to a product user as described above based on the generated product distribution clusters.

In a further aspect of the invention, a quantum computer interfacing method is presented for interfacing with a quantum computer, wherein the method comprises a) receiving quantum computer control data at a quantum computer interface for determining one or more product distribution clusters based on product producer geolocations and product user geolocations as described above, b) interfacing with the quantum computer by providing the quantum computer control data to perform a quantum computation, and c) providing via the quantum computer interface the result of the quantum computation for further processing to determine the one or more product distribution clusters based on the quantum computation.

In a further aspect of the invention, and apparatus is presented for assisting in controlling and/or monitoring a product flow of a product from a product producer to a product user, wherein the apparatus comprises one or more processors configured for performing a method comprising a) receiving product user geolocations and production site geolocations for a product, wherein the production site geolocation are indicative of the geographical locations of one or more production sites producing the product and the product user geolocations are indicative of the geographical locations of one or more product users b) generating quantum computer control data for controlling a quantum computer for performing a quantum computation for the determination of one or more product distribution clusters based on the product user geolocations and the production site geolocations, wherein a product distribution cluster represents a cluster of product users associated with a product producer of a product, c) receiving a result of the quantum computation and generating the one or more product distribution clusters based on the result, and d) providing the one or more generated product distribution clusters for assisting in controlling and/monitoring a product flow from a product producer to a product user.

In a further aspect of the invention, an apparatus is presented for assisting in controlling and/or monitoring a product flow of a product from a production site to a product user as described above, wherein the apparatus comprises one or more processor for performing a method comprising a) receiving a product request of a product user indicating a product to be provided to the product user and a product user geolocation, wherein the product user geolocation is indicative of the geographical location of product user, b) determining a product distribution cluster associated with the product user based on the product user geolocation and based on one or more product distribution clusters generated as described above, and c) generating control and/or monitoring data for controlling a product flow from a production site to the product user based on the determined distribution cluster.

In a further aspect of the invention a system is presented, wherein the system comprises a) the apparatus for assisting in controlling and/or monitoring a product flow of a product from a product producer to a product user as described above to generate one or more product distribution clusters, and b) the apparatus for controlling and/or monitoring a product flow of a product from a product producer to a product user as described above based on the generated product distribution clusters.

In a further aspect of the invention, an apparatus is presented for interfacing with a quantum computer, wherein the apparatus comprises a quantum computer interface configured to a) receiving quantum computer control data at a quantum computer interface for determining one or more product distribution clusters based on product producer geolocations and product user geolocations as described above, b) interfacing with the quantum computer by providing the quantum computer control data to perform a quantum computation, and c) providing via the quantum computer interface the result of the quantum computation for further processing to determine the one or more product distribution clusters based on the quantum computation.

In a further aspect, a computer program product is presented for controlling and/or monitoring a product flow of a product from a production site to a product user, wherein the computer program product causes an apparatus as described above to perform the method as described above when carried out on the apparatus.

In a further aspect, a computer program product is presented for assisting in controlling and/or monitoring a product flow of a product from a production site to a product user, wherein the computer program product causes an apparatus as described above to perform the method as described above when carried out on the apparatus.

In a further aspect, a computer program product is presented for interfacing with a quantum computer, wherein the computer program product causes an apparatus as described above to perform the method as described above when carried out on the apparatus.

It shall be understood that the apparatuses as described above, the methods as described above and the computer program products as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

BRIEF DESCRIPTION OF THE DRAWINGS

Fig. 1     illustrates a state representation of a qubit as used in a quantum computing device,

Fig. 2     illustrates a schematic example of a quantum computing device with qubits as calculation unit,

Fig. 3     illustrates a schematic example method for generating a control signal to perform operations on a quantum computing device and for processing measurement signals from the quantum computing device,

Fig. 4     illustrates a schematic example of a hybrid system including a classical and a quantum computing device,

Fig. 5     illustrates a schematic example of a quantum computing device based on superconductors,

Fig. 6     illustrates a schematic example of a quantum computing device based on trapped ions,

Fig. 7     shows schematically an example of the hardware principles of a quantum annealer,

Fig. 8     shows schematically and exemplarily a data flow of a method for controlling and/or monitoring a product flow of a product from a product producer to a product user.

Fig. 9     shows schematically and exemplarily a computer implemented method for assisting in controlling and/or monitoring a product flow of a product from a product producer to a product user.

Fig. 10     shows schematically and exemplarily a clustering of the product users and product producers, and

Fig. 11     shows schematically and exemplarily a detailed embodiment of a method for assisting in controlling and/or monitoring a product flow utilizing a quantum computer.

DETAILED DESCRIPTION OF EMBODIMENTS

In the following first a short introduction into the general basic principles of quantum computers and the performance of calculations of quantum computers will be provided. Further, general principles can also be found in "Quantum Computation and Quantum Information: 10th Anniversary Edition", M. A. Nielsen and I. L. Chuang (2010).

Classical computing devices use processors which are based on transistors. The state of each transistor has two controllable states 1 or 0 representing a digital binary or a bit. To perform operations on a classical computing device a human readable program code is translated via a compiler into machine-readable instructions. Machine-readable instructions are control signals, e.g. voltage settings, for each transistor. Representations of the machine-readable instructions may include binary or hexadecimal representations. Based on such machine-readable instructions, the operations are performed on the processor of a classical computing device.

Quantum computation is a relatively new computation method that uses quantum effects, such as superposition and entanglement, to perform certain computations more efficiently than classical digital computers. In contrast to digital computers, which represent information in the form of bits (e.g., "1" or "0"), as described above, quantum computing devices, i.e. quantum computers, use qubits, i.e. quantum bits, to represent information. Quantum computing devices are based on quantum elements adhering to the physics of quantum mechanics, such as superconductors, ions, atoms, quantum dots, photons, particle spins, bosons or the like. These quantum elements may be manipulated in a controlled manner to perform operations.

Although qubits and their manipulation may be described in terms of their mathematical properties, each such qubit may be implemented in a physical quantum element in any of a variety of different ways. Examples of such quantum elements include superconducting materials, trapped ions, photons, optical cavities, individual electrons trapped within quantum dots, point defects in solids (e.g., phosphorus donors in silicon or nitrogen-vacancy centers in diamond), molecules (e.g., alanine, vanadium complexes), or any medium that exhibits qubit behavior comprising quantum states and transitions there between that can be controllably induced or detected.

Generally, for any given physical quantum element that implements a qubit, any of a variety of properties of that physical unit may be chosen to implement the qubit. For example, if electrons are chosen to implement qubits, then the x, y or z component of an electron spin degree of freedom can be chosen as the property of such electrons to represent the states of such qubits. For any particular degree of freedom, the physical quantum elements can be controllably put in a state of superposition or entanglement and measurements can then be taken in the chosen degree of freedom to obtain readouts of qubit values.

In contrast to transistors of classical computing devices each quantum element of quantum computing devices can not only take the basis states $|1\rangle$ or $|0\rangle$ but also any superposition of such basis states, such as state $|X\rangle$, where,

$$|X\rangle = \alpha|0\rangle + \beta|1\rangle,$$

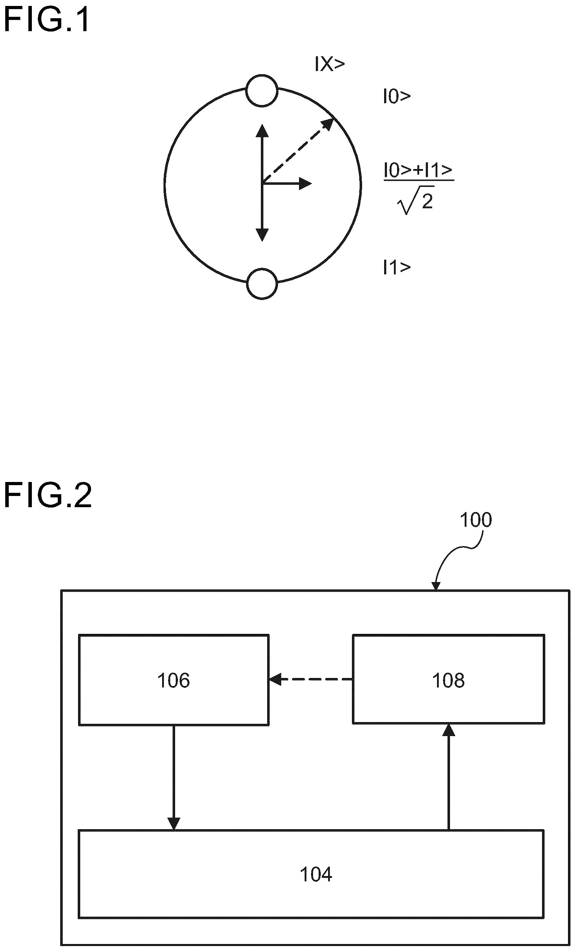

such that, $\alpha$ and $\beta$ are complex numbers whose sum of the square of the absolute value sums up to 1, *i.e.,* $|\alpha|^2 + |\beta|^2 = 1$. The state of each quantum element is represented by a state of a quantum bit, i.e. qubit, as illustrated in the two-dimensional simplification of Fig. 1. To represent such states Dirac notation is commonly used in quantum mechanics. In Dirac notation a state in a n dimensional, complex vector space, such as a Hilbert space, is represented in braket notation, for example $|X\rangle$. According to conventional terminology, the superposition of "0" and "1" states in a quantum computing device can be represented as $\alpha|0\rangle + \beta|1\rangle$. The states "0" and "1" or bits of the classical computing device are similar to the basis states 10) and $|1\rangle$ or quantum bits of the quantum computing device, respectively. The value $|\alpha|^2$ represents the probability that the qubit will be measured in the $|0\rangle$ state, while the value $|\beta|^2$ represents the probability that the qubit will be measured in the $|1\rangle$ state. If more than one qubit is present, two or more qubits may be entangled. Entanglement means that the state of one qubit is dependent on the state of at least one other qubit and vice versa, wherein further in the entangled state the respective qubits cannot be regarded as individual qubits anymore. Generally, a register of N qubits in a quantum computer can be put into a superposition of basis states at once whereas a register of TV classical bits can only be in a single basis state at once. Thus, in contrast to classical computing devices on a quantum computing device $2^N$ basis states can be manipulated and processed simultaneously allowing for exponential intrinsic parallelism.

To perform operations on the quantum computing device the computational method to solve a given problem may be translated into qubit manipulations, which may be translated into control signals for manipulating qubits. Representations of the machine-readable instructions may include common quantum mechanical representations of operations in the Hilbert space. Depending on a specific realization of the quantum computer different representations of the qubit states may be chosen. Any state preparation on the quantum computing device may be represented by a manipulation acting on the qubit states. A manipulation may be translated into control signals to control a respective part of the quantum computer, which depend on the type of quantum computing device used. This way based on the manipulation acting on the qubit states, operations may be performed on the quantum equivalent of a classical processor as part of the quantum computing device.

In gate-based quantum computer systems the manipulations acting on the qubit states may generally be one- or multi-qubit operations. A one-qubit operation may change the state of one qubit e.g., into a specific superposition which corresponds to a rotation of the vector $|X\rangle$ as illustrated in Fig 1. For example, in a superconducting quantum computer this can be accomplished by microwave pulses or in a trapped-ion quantum computer by irradiation of the ion with a laser beam. A multi-qubit operation may create entanglement between two or more qubits. For example, in a superconducting quantum computer this may be achieved by connecting qubits via an intermediate electrical coupling circuit or in a trapped-ion quantum computer via controlling the collective vibrations of the trapped ions.

Generally, to prepare manipulations for solving a given problem a respective quantum mechanical representation of the problem may be translated into qubit manipulations, which are carried out to prepare a solution of the given problem. After the preparation of the predetermined solution, i.e. after the application of the operations to the qubits of the quantum computer, a projective measurement of all individual qubits is carried out returning either 0 or 1 for each qubit. This projection usually happens in the $\sigma_z$ eigenbasis of the qubits which is also used to define the computational basis states "0" and "1" of the qubit. This means that only operators that are products of $\sigma_z$ Pauli operators or can be directly transformed into such operators can be measured concurrently. On the quantum computing device this measurement is achieved by applying a hardware-specific readout protocol of a series of readout manipulations including control pulses and monitoring the response to control pulses. For example, a superconducting qubit may be coupled to a hardware resonator. The measured shift of the resonator frequency allows to determine the state of the qubit as this shift depends on the state of the coupled qubit. In case of trapped ions, for example, an optical readout may be used, e.g. the state of the qubit is 1 if the ion emits light or 0 if the ion does not emit light or vice versa. This way qubits may be used to implement logical circuits or gates as in classical computing devices.

In Fig. 2 a schematic example of a quantum computer is illustrated. The quantum computing device 100 shown in Fig. 2 includes a quantum register 104 configured to perform the quantum computation, a manipulation part 106 configured to manipulate the quantum register, in particular, quantum elements forming the qubits, and a readout part 108 configured to collect measurement signals from the quantum register 104 for reading out the qubits after a quantum mechanical calculation. The manipulation part 106, in particular, provides manipulation signals for manipulating the quantum register, wherein the manipulation signals are generated based on received control signals that are determined based on the respective operations that should be performed on the qubits. In some embodiment a feedback loop between the manipulation part 106 and measurement part 108 can be provided. In contrast to classical computing, where one measurement cycle provides the state of a transistor, quantum computing includes performing multiple measurement cycles to provide a probability density or a probability for the qubit states in case of gate-based quantum computers.

The quantum register 104 can be based on different quantum elements representing the qubits. In some embodiments of gate-based quantum computers the qubits may be implemented by photons as quantum elements. Such optical quantum computing devices may include lasers that generate photons that are provided to a waveguide. A beam splitter can be provided for manipulating the photon states based on manipulation signals such as a mechanical rotation applied to a mirror. The measurement part 108 can in such an embodiment be a photon detector, and the measurement signals can be photons.

In other embodiments of gate-based quantum computers the qubits can be implemented by electronic states of ions trapped in a magnetic field. The manipulation part 106 can in such a case utilize a laser, and the manipulation signals can cause the providing of control laser pulses. Moreover, in this case, the readout part 108 can be a photon detector combined with read-out laser pulses, and the measurement signals 102 may be photons. Other qubit implementations may be based on superconductors as quantum elements, semiconducting material with anyons as quantum elements, or the like.

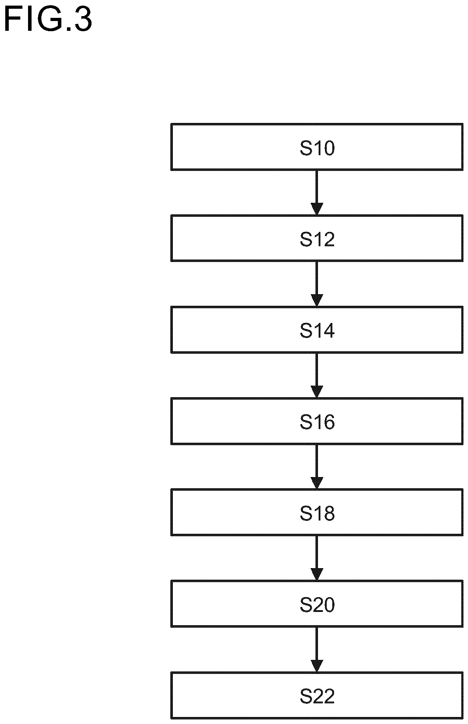

Fig. 3 illustrates a schematic exemplary method for generating a control signal to perform manipulations on the quantum computing device and for processing measurement signals from the quantum computing device. In most embodiments of quantum computing devices known to date, the control signals for the quantum computing device are prepared on a classical computing device and the measurement signals provided by the quantum computing device are further processed on the classical computing device. Other embodiments are, however, conceivable as quantum computing devices mature. In the following example, the quantum computer refers to a gate-based quantum computer for which the manipulations refer to operations on the quantum elements of the quantum computer.

For generating the control signal to perform operations on the quantum computing device, the problem to be solved with the aid of the quantum computing device is provided in step S10, preferably, in a mathematical description. Such problem may for instance include an optimization problem for training a data-driven model based on a training data set. For example the problem can include an optimization problem associated objective functions being optimized during the training performed by the quantum computer. Based on the problem to be solved, an operation description of the problem or a sub-problem may be generated in step S12, wherein the operation description comprises the operations to be applied to the qubits of the quantum computer to solve the problem in the quantum mechanical calculation. Further, the operation description can include a reference state that allows to generate a representation of an initial qubit state on the quantum computer on which the further operations are then applied by manipulating the qubit states. Based on the operation description control signals can then be generated in step S14 to control the quantum computer, for instance, by providing the control signals to the manipulation unit that can then manipulate the qubit states based on the control signals. In step S16 the manipulation unit then applies the manipulation operations to individual or multiple qubits of the quantum computer, wherein based on the manipulation operations the qubits perform the quantum mechanical calculation. After the manipulation, measurement signals can be generated to determine the result of the quantum mechanical calculation in step S18. This step can include a read-out, i.e. measurement, of the qubit states after applying the manipulation operations to the initial qubit states. The measurement signals can in step S20 then be translated into a measured quantity on the classical computer and in case of a sub-problem fed back into the problem to be solved. Finally, the result of the problem calculation including the quantum mechanical calculation can be provided on the classical computing device in step S22.

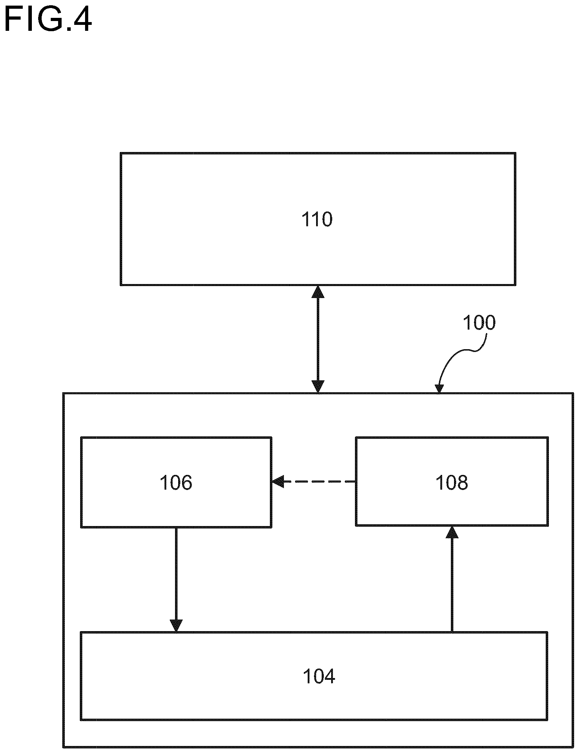

Fig. 4 illustrates a schematic example of a hybrid system including a classical and a quantum computing device. As described with respect to the method illustrated in Fig. 3, quantum computing devices are often used in connection with classical computing devices. As shown in Fig. 4 a problem preparation system, e.g. control signal generation apparatus, can be realized as a classical computing device 110 performing, for instance, steps S10, S12, S20, S22 of the method illustrated in Fig. 3. A controlling unit can then be provided as interface between the classical computing device 110 and the quantum computer 100, wherein the controlling unit can also be a classical computing device, for instance, performing step S14. The control unit can then be communicatively coupled with the manipulation part 106 that can control the manipulators of the quantum computing device. Also, the manipulation part 106 can be realized as a classical computing device, for instance, a classical controlling hardware for the control of specific hardware components of the quantum computer that perform the manipulation of the qubits. However, the manipulation part 106 is generally regarded as part of the quantum computer, since it directly influences the quantum register. The quantum computing device 100 is adapted to perform the quantum operation S16, in particular, by the manipulation of the qubits of the quantum register. The measurement part 108 that is also generally regarded as part of the quantum computing device can then perform the step S18 by utilizing classical hardware. The measurement part 108 can then be communicatively coupled to the preparation system 110 for further processing of the measurement signals.

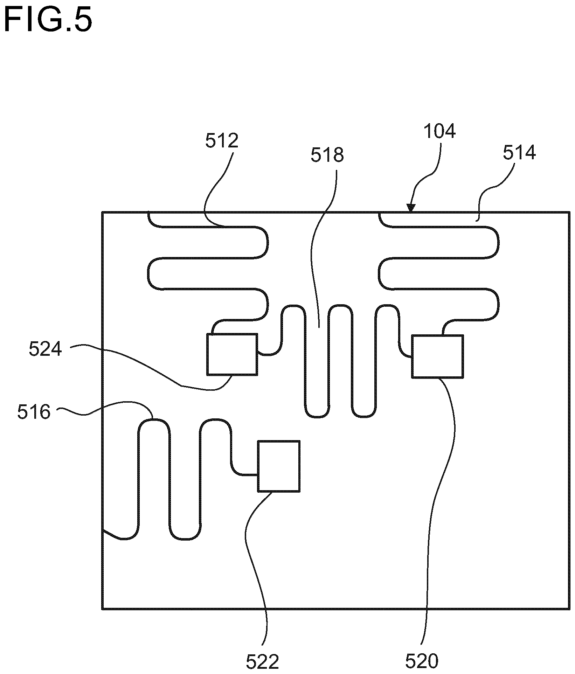

Fig. 5 illustrates a schematic example of a quantum computing device based on superconductors. Superconducting quantum computing devices are one of the solid-state quantum computing technologies. Here the quantum register 104 can include superconducting circuits 520, 522, 524 based on Josephson junctions. The qubits can then, for instance, refer to charge, flux, transmon, or phase qubits depending on the quantity of the superconducting circuits that are chosen to represent the qubits. Fig. 5 refers to a simplified illustration of a superconducting quantum computer utilizing charge qubits. For charge qubits the different states of the qubit are represented by an integer number of Cooper pairs on a superconducting island. In case of gate-based quantum computing quantum manipulations can then be performed by manipulating the qubits through microwave pulses. Resonators 512, 514, 516 can be utilized to manipulate the state of the qubits by applying the microwaves or for reading out the state of the qubits by measuring respective microwaves, wherein generally different resonators are used for the manipulation of the state of the qubits and the readout of the qubits. Moreover, resonator 518 can be utilized for applying microwaves that entangle the qubits. However, instead of resonator 518 the entanglement can also be achieved by an inductive or capacitive coupling of the superconducting circuits or even by providing another qubit, here a superconducting circuit, between the to be entangled qubits.

On an operational level such systems are maintained at extremely low temperatures, e.g., in the tens of milli Kelvin (mK). The extreme cooling of the systems keeps superconducting materials below their critical temperature and helps to avoid unwanted state transitions. To maintain such low temperatures, the quantum information processing systems may be operated within a cryostat, such as a dilution refrigerator. In some implementations, control signals are generated in higher-temperature environments, and are transmitted to the quantum computer using shielded impedance-controlled GHz capable transmission lines, such as coaxial cables. In some implementations, the state measurement of superconducting qubits is achieved using a dispersive detection scheme. In order to read out or detect the state of any qubit, a probing signal, e.g., a travelling microwave, may be excited along a readout transmission line coupled to the qubit via a respective readout resonator. The frequency of the probing signal can be in the vicinity of the resonance frequency of the readout resonator. Depending on the internal quantum mechanical state of the qubit, the intensity or phase of the probing signal transmitted along the readout transmission line may be altered because the reflectivity of the readout resonator coupled to the qubit changes depending on the state of the qubit. This allows for the state detection of the qubits, wherein during the readout of a qubit state the state of the qubit collapses, i.e. is projected with the respective probability onto one of the basis states. By performing the quantum mechanical calculation and the readout a plurality of times the respective probabilities can be determined. Further details for superconducting quantum devices are described e.g. in documents EP 3830867 A1, EP 3449427 A1, US 2020272925 A1, CN 212061223 U and US 2019019099 A1.

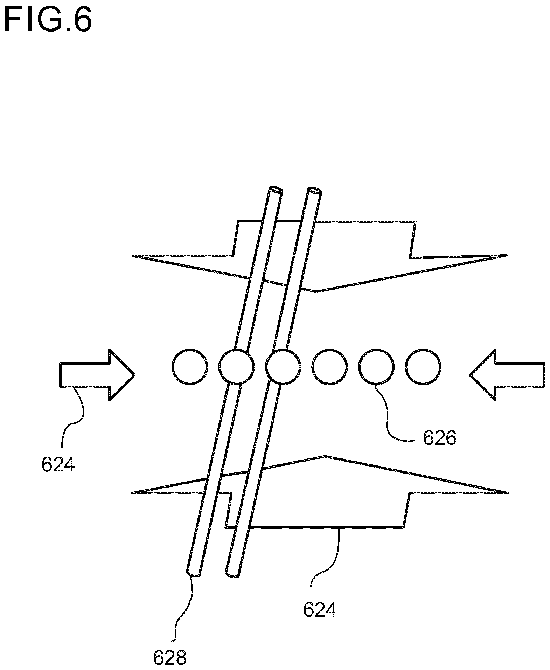

Fig. 6 illustrates a schematic example of a quantum computing device based on ions in an ion trap. Similar to neutral atom traps ion traps with, e.g. positively charged Calcium ions, can be used to implement the quantum computing device. Here ions 626 are trapped in an oscillating electromagnetic field 624 inside a high or ultra-high vacuum. The ions 626 are laser cooled and held in the oscillating electrical field 624. For qubit manipulation such as superposition or entanglement laser light 628 at different frequencies may be used.

Generally, based on the above described quantum computer realizations gate-based type calculations can be performed on a quantum computer hardware architecture. The gate-based type calculation is based on quantum gates. In contrast to classical gates, there is an infinite number of possible single-qubit quantum gates that can change the state vector of a qubit. Changing the state of a qubit state vector typically is referred to as a single qubit rotation, and may also be referred to herein as a state change or a single-qubit quantum gate operation. A rotation, state change, or single-qubit quantum gate operation can be represented mathematically by a unitary 2 x 2 matrix with complex elements. A rotation corresponds to a rotation of a qubit state within its Hilbert space, which can be conceptualized as a rotation of a vector on the Bloch sphere, wherein the Bloch sphere is generally known as a geometrical representation of the space of the pure states of a qubit. Multi-qubit gates alter the quantum state of a set of qubits. For example, two-qubit gates rotate the state of two qubits as a rotation in the four-dimensional Hilbert space of the two qubits, wherein, as generally known, the Hilbert space is an abstract vector space possessing the structure of an inner product that allows length and angle to be measured. Furthermore, Hilbert spaces are complete, i.e. there are enough limits in the space to allow the techniques of calculus to be used.

Not all quantum computers are gate-based quantum computers. Embodiments of the present invention are not limited to utilizing gate-based quantum computers. As an alternative and in particular advantageous example, embodiments of the present invention can also utilize, in whole or in part, a quantum computer that is implemented using a quantum annealing paradigm which is an alternative to the gate-based quantum computing paradigm. More specifically, quantum annealing is a metaheuristic for finding the global minimum of a given objective function over a given set of candidate solutions (candidate states), by a process using quantum fluctuations. In particular, quantum annealing is closely related to adiabatic quantum computing.

In more detail, quantum annealing is a heuristic quantum optimization algorithm which works on the basis of adiabatic quantum computation governed by an adiabatic process. Evolution of a quantum system defined by a state $|\psi(t)\rangle$ at any time $t$, is governed by Schrödinger's Equation, as shown below.

$$i\frac{h}{2\pi}\frac{\partial|\psi(t)\rangle}{\partial t} = \mathcal{H}(t)|\psi(t)\rangle \,,$$

where $i$ is the unit imaginary number, $h$ is the Planck's constant, and $\mathcal{H}(t)$ is the Hamiltonian of the system at time $t$. An adiabatic process is one for which the initial Hamiltonian $\mathcal{H}_{\text{init}}$ changes very slowly to some different final Hamiltonian $\mathcal{H}_{\text{final}}$. The adiabatic theorem states that if a system is in the nth energy state (or nth eigen vector) of $\mathcal{H}_{\text{init}}$, then the system will remain in the nth energy state of $\mathcal{H}_{\text{final}}$ under adiabatic change of the Hamiltonian. The preparation of the algorithm requires the $\mathcal{H}_{\text{init}}$ and $\mathcal{H}_{\text{final}}$, and at any point of time t the Hamiltonian is described by $\mathcal{H}(t)$, where,

$$\mathcal{H}(t) = \left(1 - \frac{t}{T}\right)\mathcal{H}_{\text{init}} + \frac{t}{T}\mathcal{H}_{\text{final}} \,,$$

wherein $T$ is the time over which the adiabatic change should occur. Quantum Annealing is a process of slowly changing $\mathcal{H}(t)$ from the ground state of a known initial state of $\mathcal{H}_{\text{init}}$ to the problem Hamiltonian $\mathcal{H}_{\text{final}}$. $\mathcal{H}_{\text{init}}$ is typically chosen such that it refers to an easy-to-prepare state on the quantum annealing hardware. In case of an optimization problem, like the training of a data-driven model $\mathcal{H}_{\text{final}}$ can be chosen based on the Ising model resulting in a quadratic unconstrained binary optimization problem that can be solved by the quantum computer as described in more detail in the following sections. For a system to stay in its ground state, the time $T$ over which the adiabatic change should occur is given by

$$T \propto \frac{1}{\left(\min_t \Delta\lambda_t\right)^2}$$

where $\Delta\lambda_t$ is the difference between the first excited energy and the ground energy of $\mathcal{H}(t)$.

A quantum annealer is in particular suitable for solving complex optimization problems and thus can in an embodiment of the invention advantageously be utilized. Quantum annealing works by minimizing a system of interconnected qubits to their lowest energy state. The system is initially set as a quantum superposition of states, where there is an equal probability for all spin permutations of the qubits (all possible solutions to the problem). At the end of quantum annealing the qubits either end up in a spin-up (1), or spin-down (0) state which encodes the solution to the respective optimization problem. The problem solution can then be achieved by the slow and smooth evolution of the spin system to its ground state referring to the optimal solution to the optimization problem.

Generally, also quantum annealing procedures start with utilizing a classical computer providing or generating an initial Hamiltonian and a final Hamiltonian based on a computational problem to be solved, and providing the initial Hamiltonian, the final Hamiltonian and an annealing schedule as input to a quantum computer. In case of an annealing procedure in which an optimization problem is solved, preferably, the final Hamiltonian refers to an Ising Hamiltonian representing the optimization problem. The quantum computer is then adapted, for instance, by utilizing a respective control unit controlling a manipulation part of the quantum computer, to prepare a relatively easy to prepare initial state, such as a quantum-mechanical superposition of all possible states, e.g. candidate states, with equal weights, based on the initial Hamiltonian. After the preparation of the initial state on the quantum computer, the initial state is then evolved according to the annealing schedule following a time-dependent Schrödinger equation referring to a natural quantum-mechanical evolution of the physical system of the quantum computer. More specifically, the state of the quantum computer undergoes time evolution under a time-dependent Hamiltonian, which starts from the initial Hamiltonian and terminates at the final Hamiltonian. If the evolution rate is slow enough, the system stays close to the ground state of the instantaneous Hamiltonian. At the end of the time evolution, the set of qubits, i.e. quantum elements, on the quantum annealer is in a final state, which is expected to be close to the ground state of the Ising Hamiltonian that corresponds to a solution to the original problem, referring, for instance, to an optimization problem. The final state of the quantum computer can then be measured, thereby producing results that can be utilized for solving the original problem. The measurement operation can be performed, for example, in any of the ways described already above. A classical computer can then perform postprocessing on the measurement results to produce an output representing a solution to the original computational problem. A quantum annealer as described above can, for instance, be realized on a superconducting quantum computer hardware.

A Quantum Approximate Optimization Algorithm (QAOA) is another quantum heuristic algorithm that can be utilized for solving optimization problems and works with a circuit model of quantum computing. The algorithm starts with qubits initialized with the ground state of $\mathcal{H}_{\text{init}}$. The problem Hamiltonian $\mathcal{H}_{\text{final}}$ is encoded as a parametrized Unitary gate on the respective qubits. Additionally, another parameterized unitary gate is applied to all the qubits which is prepared from a mixer Hamiltonian. A classical optimization of the parameters of the unitary gates is carried out such that final quantum state of the qubits converges to the ground state of the problem Hamiltonian $\mathcal{H}_{\text{final}}$. Also this algorithm can be utilized advantageously to solve an optimization problem for generating distribution cluster.

A Grover's Adaptive Search is a quantum algorithm which is based on the famous Grover's algorithm for unstructured database search. Optimization of a Hamiltonian is the task of locating the state of the system which corresponds to the ground state energy. One way to find the ground state energy is to carry out a brute-force search, i.e., carry out an exhaustive search of all possible states for the minimum energy. This procedure involves exponentially expensive computations, and thus making the optimization problem very difficult to solve. Grovers adaptive search is an algorithm which offers a quadratic speed-up over the brute-force method. The algorithm works in an iterative manner and locates all the solutions which are better or equal to the current threshold solution. The iterative process is repeated by updating the threshold solution to the best current and flagging all the solutions that are better than the threshold. The termination criteria for the algorithm are typically the number of iterations, the runtime or the threshold solution value. Also this quantum algorithm can be utilized for solving an optimization problem for generating distribution clusters.

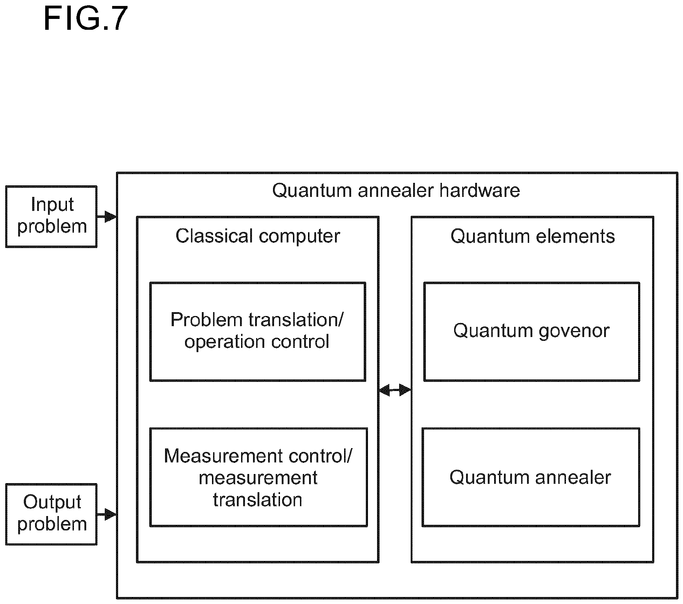

Fig. 7 shows schematically and exemplarily an example of hardware principles and structures of a quantum annealer that can be advantageously utilized as quantum computing unit in embodiments of the invention. In this example, the quantum annealer hardware comprises a classical computer part and a quantum elements part. The classical computing part is configured to interact with respective quantum elements of the quantum computing part, for example, for controlling, manipulating or measuring respective quantum elements as described above. Further, the quantum annealer hardware comprises an interface to the classical computer that allows to input a problem and to output a respective solution of the problem or at least respective measurement results of the computation of the input problem. The classical computer of the classical computing part is configured to control the operation of the respective quantum elements of the quantum part. However, the classical computer can also be configured for additional tasks. For example, the classical computer can be configured to provide a problem translation of a provided problem into a respective quantum mechanical description or quantum mechanical algorithm that can be performed on the respective specific quantum element hardware. Moreover, the classical computer allows to translate the specified quantum algorithm and operations included in the algorithm into the specific control signals that allow to manipulate the quantum elements. Since each quantum computer can have different manipulation and controlling mechanisms built into the hardware of the quantum computer, this translation step can be very specific for each quantum computer and is thus in most cases provided by a classical computer specifically configured for this task for a specific quantum computer. Further, the classical computer allows to control the measurements of respective quantum elements as a result of a quantum computation and also a translation of the measurements, for instance, of respectively measured states of the quantum elements into electronically and digitally utilizable quantities. Further, the translation can also refer to providing an overall result of the quantum computation which might include averaging, error correction, etc.

The quantum element part of the quantum annealer hardware comprises the quantum annealer itself and optionally an additional quantum governor. The optional quantum governor can be considered as a class of non-information bearing degrees of freedom that can be configured to steer a dissipation dynamics of information bearing degrees of freedom of the quantum annealer. For example, the quantum governor can be configured to navigate the quantum evolution of a disordered quantum annealing hardware at finite temperature in a controlled manner and improve the adiabatic quantum computation process. This can be achieved, for example, by the quantum governor by facilitating a driving of the quantum annealer towards a quantum phase transition while at the same time decoupling the quantum annealer from excited states by making excited states effectively inaccessible by the quantum annealer. The quantum annealer itself can be realized, for instance, by a programmable quantum chip. For example, such a quantum chip can include a predetermined number of cells comprising a respectively predetermined number of qubits. The qubits can be connected by programmable inductive couplers, wherein the qubits of a cell are connected to each other but can also be connected with the qubits of other cells in specific predetermined patterns that define the programmability of a specific quantum annealer. A particular advantageous example of a quantum annealer that can be utilized in this invention can be found, for instance, in the document EP 3 092 607 A1 incorporated herein by reference.

In the following the term operation description refers to a representation of a problem that comprises a sequence of quantum operations that should be applied during a quantum mechanical calculation of the problem. The term "quantum operation" can include in the context of this invention all types of quantum gates as described above and more generally all manipulations known for quantum elements on any quantum computer hardware. Moreover, the term can also include operations performed on components of the quantum computer representing a coupling between the quantum elements forming the qubits. These operations then refer to any kind of change of the state of the coupling representing components, for example, a turning of a coupling on and off, or the change of a field frequency, etc. Further, in some applications the quantum operations can also include measurement operations. This allows to implement algorithms using a measurement feedback. For example, in such an algorithm a quantum computer can execute the quantum gates defined by the sequence of quantum operations and then measure only a subset, i.e., fewer than all, of the qubits in the quantum computer, and then decide which further quantum manipulations to execute next based on the outcome of the one or more measurements. In particular, measurement feedback can be useful for performing quantum error correction, but is not limited to use in performing quantum error correction.

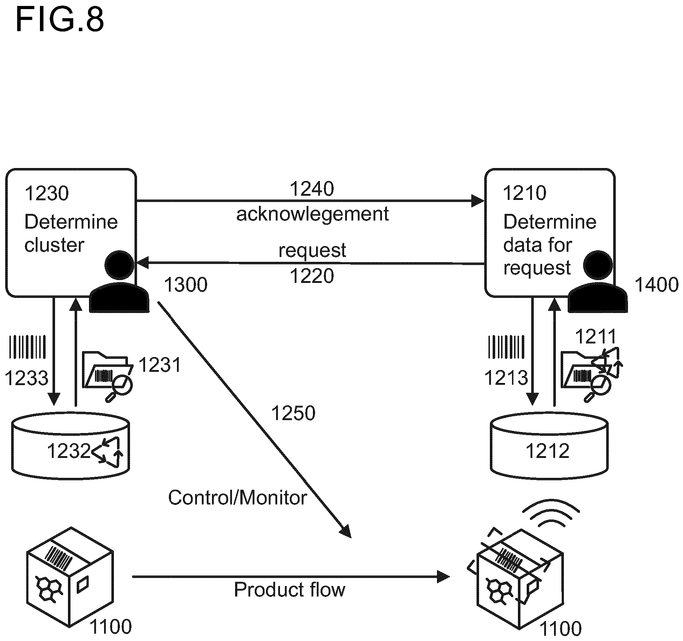

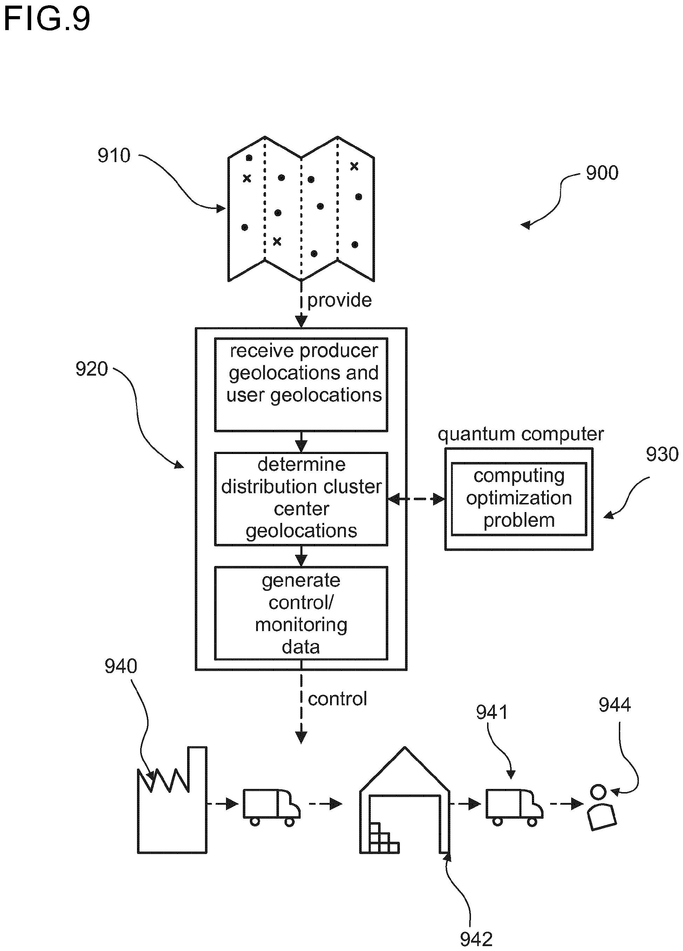

Fig. 8 shows schematically and exemplarily a data flow of a computer implemented method for controlling and/or monitoring a product flow of a product from a product producer to a product user. The data flow can start, for instance, at the site of the product user with determining that a specific product is needed by the product user. For example, a stocking system comprising a stocking database 1212 can determine that the product user is running out of stock of a product 1100. For instance, a product user can provide a request together with the product ID of the product 1100 to a stocking database 1212 to determine if the product that is needed, e.g., for a production of another product, is in stock. Based on the result 1213 of the request to the database 1212, the product user 1400 can determine that it is necessary to request the product 1100 from a product producer. The product user 1400 can then prepare a product request to be provided to a service provider 1300. For example, the product user 1400 can determine 1210 data to be provided with the request including, for example, a product user identification, a product identification, an amount of product, and/or a geolocation of the product user 1400. The provided geolocation of the product user 1400 can be, for instance, an address of the product user 1400 to which the product should be provided. However, the geolocation can also be provided in GPS coordinates or relative to another known location. Moreover, in cases in which the product user is known to the service provider 1300, the request might only comprise the identification of the product user 1400 and the product identification and optionally a product amount and timing, while, if necessary, the service provider 1300 might have the possibility to derive the user geolocation from the identification of the user, for instance, via a respective database. The product user then provides the respective request 1220 to the service provider 1300. The service provider 1300 can then acknowledge the request 1240 at this point but also at later points during the method. Moreover, an acknowledgement can also be omitted. The service provider 1300 then determines 1230 a product distribution cluster associated with the product user based on the user request. In particular, the user request is provided 1231 to a database 1232 on which generated product distribution clusters and associated product users together with associated product producers and optionally at least parts of control data are already stored. A product distribution cluster generally represents a cluster of product users that is associated with the product producer of a product and is generated based on product producer geolocations and product user geolocations. If the product user 1400 is already known and stored in association with the product distribution cluster on database 1232, the determining of the product distribution cluster can comprise utilizing the product user identifier to look up the association of the product user identifier with a respective product distribution cluster and determining based on the determined product distribution cluster the product producer that is associated with the product distribution cluster and optionally respectively stored control data. If the product user 1400 is not already part of the generated product distribution clusters, the determining of the product distribution cluster can comprise utilizing a product user geolocation to determine an already known and stored product user which is geographically situated next to the new product user. The new product user can then be associated with the same product distribution cluster as the already known product user situated next to the new product user. Thus, the same product producer can be associated to the new product user as is associated with the product distribution cluster of the already known product user next to the new product user. However, in some cases, introducing one or more product users to determine a product distribution cluster can initiate a new determination of the product distribution clusters, in particular, in cases in which a distance between a new product user and an already known product user next to the new product user lies above a predetermined threshold, indicating that the new product user might lead to a rearrangement of the product distribution clusters. The determination of the product distribution clusters in this case will be described in more detail with respect to Fig. 9. Based on the result 1233 of the request 1231, referring to the product distribution cluster associated with the product user, the service provider 1300 can determine control data for controlling and/or monitoring a product flow from a product producer to the product user 1400. For example, a service provider can determine which product producer is associated with the product distribution cluster and thus the product user 1400 and can provide control data that initiate the product flow from the respective product producer to the product user. Moreover, if information in at least a part of the control data is already stored associated with the distribution cluster also this information can be utilized to generate the control data. For example, information on a preferred shipping route and manner can cause the generation of control data that allows to control and/or monitor the preferred shipping route and manner. The controlling and/or monitoring 1250 of the product flow is then performed during the process of transporting the product 1100 from the product producer to the product user. This process can then end if the product 1100 reaches the product user and is, for instance, scanned in the stocking system of the product user 1400 and processed to acknowledge the receipt of the product 1100 which can end the controlling and/or monitoring of the product flow.

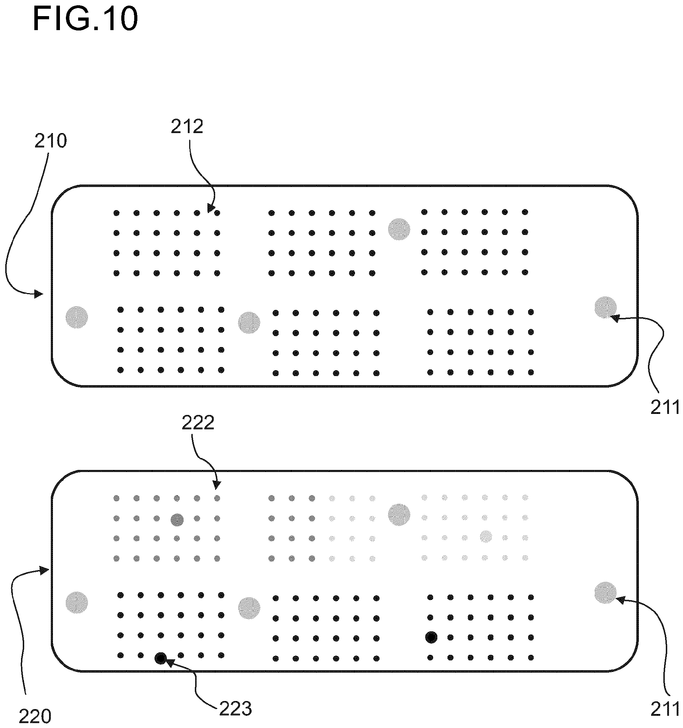

Fig. 9 shows schematically and exemplarily a computer implemented method 900 for assisting in controlling and/or monitoring a product flow of a product from a product producer to a product user as described, for instance, in Fig. 8. The method 900 refers to determining the product distribution clusters based on the product producer geolocations and product user geolocations. The method comprises in a first step 920 providing the geolocations of product producers and product users 910 participating in controlling and/or monitoring a respective product flow. The further steps of the method are then performed, for instance, via a classical computing device optionally combined with a quantum computer. In a first step the geolocations of the product users and product producers are received. In a next step, one or more product distribution clusters are generated based on the product producer geolocations and product user geolocations. For example, the generating can comprise formulating an optimization problem that is formulated such that the optimization of the optimization problem determines the product distribution clusters and the product users and respective product producers associated with the product distribution clusters. In a preferred embodiment that will be described with respect to Fig. 10, the product distribution clusters are represented by product distribution cluster centers that refer to the geolocations of product users next to a geographical center of the determined product distribution cluster. The optimization problem can be formulated further based on one or more objectives that are associated with the product user geolocations and the product producer geolocations. Such objectives can refer to minimizing a distance between product users associated with the product distribution cluster, minimizing a total number of product distribution clusters, minimizing a relation between distances of a) a product producer geolocation and distribution cluster geolocations and b) product user geolocations and product producer geolocations, minimizing a distance between a product distribution cluster geolocation and product user geolocations of product users associated with the respective product distribution cluster. Further, the objectives can comprise objectives such as determining a product distribution cluster such that product users are associated to the product distribution cluster that are located in the same administrative region. Moreover, it has been found to be advantageous if the product distribution clusters are determined such that each product user is assigned to exactly one distribution cluster. It can also be advantageous if one product producer is assigned to only one product distribution cluster. More details on further embodiments for determining the product distribution clusters are provided with respect to Fig. 10.

For determining the product distribution clusters, a quantum computer is be utilized together with a respective classical computer to utilize the results of the quantum computation for determining the product distribution clusters. For complex cases with a plurality of product users and product producers, for instance, in case of a global product flow network, and respective pluralities of objectives it has been found by the inventors that it is advantageous to utilize a quantum computer, as described above, for solving the respective optimization problem. The method comprises generating control data for controlling a quantum computer. For example, the control data can be provided to a quantum computer 930 for performing a quantum computation of a respective optimization problem. The control data can comprise the respective optimization problem, wherein then a classical computer controlling the quantum computer can transform the optimization problem into an operation description that is then applied to the quantum elements for performing the quantum computation of the optimization problem. However, also the control data can directly comprise a respective operation description to be performed by the quantum computer 930. The result of the quantum computation on the quantum computer 930 is then provided again to the classical computer 920 and the distribution clusters are generated based on the result of the quantum computation. The generated product distribution clusters can then, for instance, together with associated product users and associated product producers be stored on a respective storage unit to be utilized in a method as described above, in particular, in a method for generating control data for controlling and/or monitoring a product flow. For example, product distribution centers can be utilized to determine for a product user 944 a respective product producer that allows a distribution of the product 941 to the product user 944. As shown in Fig. 9, the product producer can be a factory 940 or can be a storage unit in which the product is already stored. Moreover, if the product distribution center is associated with a product distribution facility, like a distribution storage unit 942, the providing of the product can be controlled and/or monitored to be performed via the distribution facility. The transportation means 941 shown in Fig. 9 refers to a transportation via a delivery service, however, depending on the respective product, the product flow can also be provided, for instance, via a pipeline.

In the following more detailed examples for generating product distribution clusters are described. In a preferred example, the generation of the product distribution clusters comprises an optimization procedure utilizing a quantum computer. An example of the optimization process and the utilized optimization problem is given with respect to Fig. 10. The optimization problem is associated with a product producers geolocations 211 and a plurality of product user geolocations 212 that can, for instance, be spread around the globe and are represented in Fig, 10 as small dots. The aim of the optimization problem is to determine distribution clusters that pool product users and product producers. The distribution cluster then allow to also pool the product flow from a product producer to the respective product users of a distribution cluster. The product distribution centers can be represented as product distribution cluster centers that define a geolocation for the product distribution cluster. The product distribution cluster center geolocations can be determined by the optimization process, for example, in a manner that, (a) all the product users associated with a product distribution cluster belong to the same administrative region to maintain identical product flows with respect to administrative aspects, (b) any product user is allocated to a single product distribution cluster such that planning a delivery to the product distribution cluster center allows also to plan a delivery to a respective product user of the product distribution cluster. The product distribution cluster centers can also represent delivery point or inventory locations via which product flows can be routed from the product producer to the product user. In a preferred example the geolocations of the distribution cluster centers are centered around a clustered set of product users such that the product users are uniformly distributed to respective product distributing cluster centers, while the distances from respective product users and product producers is kept at a minimum possible value. A possible set of product distribution clusters and product distribution cluster centers is shown in the lower part of Fig. 10 for the schematic configuration shown in the upper part of Fig. 10. As can be seen in Fig. 10 that the distribution cluster center geolocations are determined in a manner that the product users are centered around the distribution cluster centers, while the demand weighted distance of the product users to a respective distribution cluster center is minimized. Additionally, all the product users belonging to a product distribution cluster can belong to the same administrative region. Since these distribution cluster center geolocations are centered around the product user cluster, a distribution cluster center geolocation can be determined as a product user geolocation. All a product flow to product users belonging to a distribution cluster can be controlled and/or monitored by controlling and/or monitoring the product flow to a distribution cluster center geolocation.

An optimization problem for optimizing the distribution clusters can take the following objective into account. Given the product producers and product user geographical locations and optionally a demand requirement of each product user, the objectives can be any of the following a) that product user is assigned to one product cluster, optionally, such that the assigned product cluster is the same for all product the user demands, b) a demand weights distances from a product producer to its product users is minimized, c) a distance between the product users belonging to a distribution cluster are as close as possible to each other, for better scheduling of transportation of products from a product producer to all its product users, d) a distance of all the product distribution cluster centers to the product producers relative to the distance of the product users to the product producers is minimized, to ensure closer proximity of product users to the distribution cluster centers compared to a product producer location e) the total number of distribution clusters is minimized. A problem taking these objectives into account can be a hard optimization problem meaning that an accurate solution can become infeasible on classical computers as the size of the problem, e.g., the number of product users and product producers, grows. The problem can mathematical be formulation as a quadratic unconstrained binary optimization problem, as will be described in more detail below.

An optimal solution of the above-mentioned optimization problem is of high importance as it would lead to i) a more effective product flow planning, controlling and/or monitoring, ii) a higher transportation efficiency and an optimized transportation time between product producers and product users as distances are minimized and a better scheduling of transportation becomes possible. In particular the latter improvements will also lead to reduced $CO_2$ emissions and generally environmental impact as typically heavy-load transportation, e.g., via trucks and planes, still heavily relies on non-renewable energy sources such as fossil fuels.

In the following an example of a respective mathematical problem formulation is given. However, also other formulations and methods are applicable. Moreover, in the following the solution of the problem is described with respect to utilizing a quantum computer, however, also classical computers can be utilized, for instance, if the number of product users is lower or if less objective are taken into account.

In an example, the optimization problem can refer to $C$ product users and $P$ product producers. In the following, let c denote a product user such that $c \in \{0,1, ..., C - 1\}$; $a_c$ denote an administrative region for product user $c$, wherein an administrative region of the product users is available in advance and wherein the parameter $a_c$ is an indicator for each product user and not a problem variable; $m$ be a product distribution cluster center geolocation, wherein in this example the product users themselves act as the product distribution cluster centers, and thus each product distribution cluster center is indexed as $m$, such that $m \in \{0, 1, 2, ..., C - 1\}$; $p$ be a product producer geolocation, such that $p \in \{0, 1, 2, ..., P - 1\}$; $d_c^{c'}$ be the symmetric distance matrix element, such that $d_c^{c'}$ is the distance between product users or product distribution cluster centers $c$ and $c'$. Note that some of the product user geolocations also serve as the product distribution cluster centers, hence the distance matrix for product distribution cluster center locations remains identical; $d_m^p$ be the symmetric distance matrix element, such that $d_m^p$ is the distance between product distribution cluster center $m$ and product producer $p$; $r_c$ be the demand quantity of product user $c$, wherein this demand can be any raw material, or a product required by a product user. In addition to above parameters a hyperparameter called the severity-factor $\rho$ can be utilized. This factor can be used to decide the number of distribution clusters in the solution. A high value of $\rho$ allows for only a few numbers of distribution clusters. It is noted that although in this example $m$ as product distribution cluster center geolocation is at a product user geolocation, in other embodiments $m$ can also be any other location that is suitable as product distribution center.

Further two binary decision variables can be defined as $x_c^m$ and $y_m$ to formulate the problem as QUBO. The first decision variable is defined as $x_c^m$ such that,

$$x_c^m = \begin{cases} 1, \text{if product user } c \text{ is assigned to cluster center } m, \\ 0, \text{otherwise}, \end{cases} \quad \forall m, \forall c,$$

and

$$y_m = \begin{cases} 1, \text{if a cluster center } m \text{ is at product user } c \text{ location}, \\ 0, \text{otherwise}, \end{cases} \quad \forall m.$$

Using the above two decision variables, and the input parameters, an optimization problem can be defined as the minimization of $H(x, y, \rho)$, which can be expressed as the summation of $\mathcal{L}(x, y, \rho)$ referring to an influence part of comprising linear terms, i.e., linear in the decision variables, and $Q(x,y)$ referring to an interaction part comprising quadratic interactions, i.e., quadratic in decision variables. Formally,

$$H(x, y, \rho) = \mathcal{L}(x, y, \rho) + Q(x, y). \tag{1}$$

These influence and interaction parts can be defined as below.

$$\mathcal{L}(x, y, \rho) = \beta \cdot \sum_{\forall m} \rho \cdot y_m + 2 \cdot \alpha \cdot \sum_{\forall c}\sum_{\forall m} x_c^m + \beta \sum_{\forall m}\sum_{\forall c} d_c^m \cdot r_c \cdot x_c^m$$

$$\tag{2}$$

$$Q(x,y) = -2 \cdot \alpha \cdot \sum_{\forall c}\sum_{\substack{\forall m,m' \\ \text{s.t.,} m \neq m'}} x_c^m \cdot x_c^{m'} - \alpha \cdot \sum_{\forall m}\sum_{\forall c} x_c^m \cdot y_m + \alpha \cdot \sum_{\forall m}\sum_{\forall c}\sum_{\substack{\forall c' \\ a_c \neq a_{c'}}} x_c^m \cdot x_{c'}^m + \beta$$

$$\cdot \sum_{\forall m}\sum_{\forall c}\sum_{\substack{\forall c' \\ a_c = a_c'}} d_c^{c'} \cdot x_c^m \cdot x_{c'}^m$$

$$\tag{3}$$

In the above terms, there are three hyperparameters, namely $\alpha$, $\beta$ and $\rho$. $\beta$ can be referred to as an objective weight and can range from any integer between 10 to 100, while $\alpha$ is a penalty coefficient and its value is advantageously at least 1000 times that of $\beta$ value. This example of assignment of values of $\alpha$ and $\beta$ ensures that the constraints are fulfilled, and the optimization does not provide solutions at the expense of the constraints.

$\rho$ is a positive coefficient which decides the severity of the number of distribution clusters in the solution. $\rho$ is the severity-factor that determines the number of distribution clusters determined. A high value of $\rho$ allows for only a few numbers of distribution clusters, while a low value of $\rho$ would allow for all the product users to act as their own distribution cluster. Both these scenarios are not optimal due to product flow challenges, and it is preferred to utilize the following method to decide the appropriate value for $\rho$. However, instead of the method described in the following, the value for $\rho$ can also be set based on user experience or other factors. An example of a preferred method for obtaining a value of $\rho$ is based on the so-called distance-error metric. The transportation resources of a product can be calculated from the distances by weighting with the demand requirement $r_c$ of individual product users. The weighting of the distance errors of the product user geolocations with the demand quantities provides the transport resource errors accordingly. Therefore, weighted distance errors can be used to determine the transport resources. The distance errors are determined by the differences that arise when the product is not transported from product producer $p$ directly to the product user c, but instead via a distribution cluster center. This distance error term can mathematically be defined as $\mathbb{E}_\rho$ for a given $\rho$, such that

$$\mathbb{E}_\rho = \max_{\forall p,m} \frac{\sum_{\forall c} r_c \cdot |d_c^p - d_m^p|}{d_m^p \cdot \sum_{\forall c} r_c} \cdot y_m \cdot x_c^m$$

In order to select the distribution cluster center based on a given value of $\rho$, the distance error term $\mathbb{E}_\rho$ can be minimized to a minimum threshold error, e.g., $\varepsilon \leq$ **0.2.** Hence, the value of $\rho$ can be obtained by initializing $\rho$ with an initial value and solving for **H** on a quantum computer. If the distance-error value $\mathbb{E}_\rho$ is below a threshold $\varepsilon$, the optimization of the QUBO term is repetitively carried out by incrementing the value of $\rho$, and optimizing **H.**

As mentioned in Equation (1), the optimization problem **H(x, y, $\rho$)** is translatable into an optimization problem representation comprising two different parts $\mathcal{L}$ (**x, y, $\rho$**) and **Q(x,y),** such that, $\mathcal{L}$ (**x, y, $\rho$**) is an influence part indicative of an influence on one or more variables of the optimization problem, wherein the influence in the influence part is quantified by different influence parameters. The set of influence parameters corresponds to the coefficients of the linear terms and have a real world meaning. We explain this meaning for each term in the definition of $\mathcal{L}$ (**x, y, $\rho$**), in the table below.

| Terms in $\mathcal{L}$ (**x, y**, $\rho$) | Real-world Meaning of the coefficient | Computation of the coefficients on a classical computer |
|---|---|---|
| $\beta \cdot \sum_{\forall m} \rho \cdot y_m$ | The coefficient with each $y_m$ term is the severity-factor (see above) weighted with the objective weight $\beta$ | The coefficient $\beta$ is an input as stated above, $\rho$ is the severity factor on the number of distribution clusters in the solution. Higher the value of $\rho$ lower the number of distribution centers, and vice-versa. The exact computation of $\rho$ is done via repetitive optimization of the resulting QUBO **H(x, y, $\rho$)** and analyzing $\mathbb{E}_\rho$, as explained in the section above. |
| $2 \cdot \alpha \cdot \sum_{\forall c} \sum_{\forall m} x_c^m$ | The coefficient with each $x_c^m$ term is the penalty coefficient $\alpha$ weighted by 2. This term originates in that it is preferred that each product user must be allocated to a distribution cluster. | The computation of this coefficient is trivial and is provided as input in the form of $2 \cdot \alpha$. |
| $+\beta \sum_{\forall m} \sum_{\forall c} d_c^m \cdot r_c \cdot x_c^m$ | The coefficient is the product of the distance $d_c^m$ between a product user $c$ and a distribution cluster $m$, with demand of a product user $r_c$, weighted with the objective weight $\beta$. These terms ensure a minimization of the demand weighted distance of product users to a respective product distribution center. | The computation of the coefficient is a product of the input values of $d_c^m$, $r_c$ and $\beta$ for each term product user $c$ and distribution cluster $m$ associated with the binary variable $x_c^m$. |

**Q(x,y)** is an interaction part indicative of a two-way interaction between two variables of the optimization problem, wherein the interaction in the interaction part is quantified by an interaction parameter. The set of interaction parameters corresponds to the coefficients of the quadratic terms and have the real-world meaning:

| Terms in $Q(x, y)$ | Real-world Meaning of the coefficient | Computation of the coefficients on a classical computer |
|---|---|---|
| $$-2 \cdot \alpha \cdot \sum_{\forall c} \sum_{\substack{\forall m,m' \\ \text{s.t.},m \neq m'}} x_c^m \cdot x_c^{m'}$$ | The coefficient with each pair $x_c^m$ and $x_c^{m'}$ for all the product users $c$ and any two pairs of different distribution clusters $m$ and $m'$, is the penalty coefficient $\alpha$ weighted by -2. This term originates in that it is preferred that each product user is allocated to a distribution cluster. | The computation of this coefficient is trivial and is provided as input in the form of $-2 \cdot \alpha$. |
| $$-\alpha \cdot \sum_{\forall m} \sum_{\forall c} x_c^m \cdot y_m$$ | The coefficient with each pair $x_c^m$ and $y_m$ is the penalty coefficient $\alpha$. This term originates in that it is preferred that if a product user c is assigned to a distribution cluster $m$, then that distribution cluster center $m$ could be built as real world distribution center. | The computation of this coefficient is trivial and is provided as input in the form of $-\alpha$. |
| $$+\alpha \cdot \sum_{\forall m} \sum_{\forall c} \sum_{\substack{\forall c' \\ a_c \neq a_{c'}}} x_c^m \cdot x_{c'}^m$$ | The coefficient with each pair $x_c^m$ and $x_{c'}^m$ for all the distribution clusters $m$ and any two pairs of product users $c$ and $c'$ such that the two product users lie in different administrative regions, is the penalty coefficient $\alpha$. This term originates in that it is preferred that any two product users that belong to two different administrative regions, then they should not be assigned to the same distribution cluster. | The computation of this coefficient is trivial and is provided as input in the form of $\alpha$. |
| $$+\beta \cdot \sum_{\forall m} \sum_{\forall c} \sum_{\substack{\forall c' \\ a_c = a_c'}} d_c^{c'} \cdot x_c^m \cdot x_{c'}^m$$ | The coefficient is the product of the objective weight $\beta$ with the distance $d_c^{c'}$ between two product users $c$ and $c'$ that belong to different administrative region and are assigned to the same distribution cluster $m$. These terms originates in that it is preferred that the product users which are assigned to the same distribution center have the minimum distance to any other product user. | The computation of the coefficient is the product of the input values of $d_c^{c'}$ and $\beta$ for each pair of product users $c$ and $c'$ and distribution cluster $m$ associated with the binary variable $x_c^m$ and $x_{c'}^m$. |

Preferably the above formulated optimization problem optionally together with the optimization of $\rho$ is performed by a quantum computer utilizing any of a quantum annealing algorithm, a QAOA, and a GAS as described above. Preferably, The optimization problem is calculated at least partly on a quantum computing system referring to a quantum annealing system, wherein the control signal can be generate for controlling the quantum annealing system such that i) the interaction parameters refer to a final coupling strength between quantum elements of the quantum annealing system and ii) the variables of the optimization problem refer to quantum states of the quantum elements of the quantum annealing system. In this context, the final coupling strength between quantum elements of the quantum computing system refers to the coupling strength between the quantum elements of the quantum computing system at the end of the quantum computer calculation, i.e. after the respectively desired state of the quantum elements of the quantum computing system is prepared. Moreover, the control signals can be adapted for controlling the quantum annealing system such that the influence parameters refer to a final energetic bias between the states of a quantum element. This final bias can, for instance, be controlled by a magnetic field. In particular, the magnetic field can be used for manipulating one or more quantum elements such that the probability to find the quantum elements in a particular state at the end of the calculation is controlled.

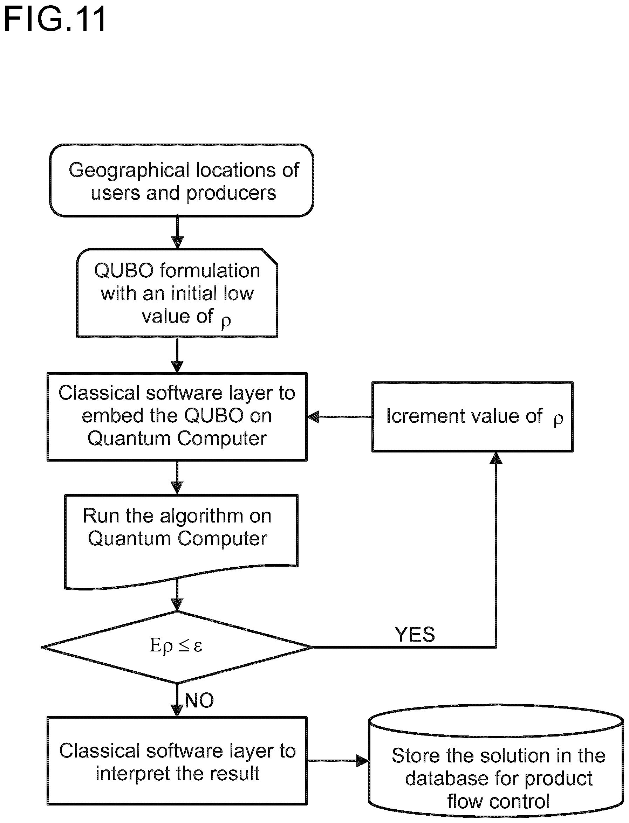

A complete overview of a possible work flow for solving the above optimization problem together with an optimization of $\rho$ is shown in Fig. 11. The solution of the optimization problem is obtained from a quantum computer usually in the form of binary strings consisting of 1s and 0s. An extra classical software layer can then be utilized to map these binary strings to obtain the solution for the optimization problem. The variables involved in the above QUBO formulation are $x_m^c$ and $y_m$ for $m \in \{0,1, \ldots, C-1\}$ and $c \in \{0,1,2, \ldots, C-1\}$. For the following example, a solution to the above problem is obtained such that the constraints are satisfied, i.e., a solution where $H_{single} = 0$, and $H_{center} = 0$. For illustrative purposes, it is assumed that the $H_{admin} = 0$, i.e., the product users assigned to a distribution cluster belong to the same administrative region. In such a case, any variable $x_m^c = 1$ denotes that the product user c is assigned distribution cluster m. Trivially, this also implies that if $x_m^c = 0$ then the product user *c* has not been assigned to the distribution cluster m. For instance, if the optimization problem refers to 8 product users, then a solution bitstring can be of the following form, as shown in the Table below.

| $x_m^c$ | | Product users *c* | | | | | | | |
|---|---|---|---|---|---|---|---|---|---|
| | | **0** | **1** | **2** | **3** | **4** | **5** | **6** | **7** |
| Distribution clusters *m* | **0** | 0 | 0 | 0 | 0 | 0 | 0 | 0 | 0 |
| | **1** | 1 | 1 | 0 | 0 | 1 | 0 | 0 | 1 |
| | **2** | 0 | 0 | 0 | 0 | 0 | 0 | 0 | 0 |
| | **3** | 0 | 0 | 0 | 0 | 0 | 0 | 0 | 0 |
| | **4** | 0 | 0 | 0 | 0 | 0 | 0 | 0 | 0 |
| | **5** | 0 | 0 | 1 | 1 | 0 | 1 | 1 | 0 |
| | **6** | 0 | 0 | 0 | 0 | 0 | 0 | 0 | 0 |
| | **7** | 0 | 0 | 0 | 0 | 0 | 0 | 0 | 0 |

The above table shows the assignment of all the product users to a distribution cluster. For any pair of *m* and *c* a solution of 0 or 1 is obtained. If the value is 1, this implies that the product user *c* is assigned to distribution cluster m. The requirement of assigning each product user to one and only one distribution cluster is also satisfied in the case shown in the table above. Additionally, product users 1 and 5 have been assigned their own distribution cluster, which implies that it is these two product user locations who act as the distribution cluster center geolocation as well. In the following table it is shown that the $y_m$ bits are equal to 1 for distribution cluster center geolocation 1 and 5, which conforms to the solution of $x_m^c$ variables in the table above.

| Distribution cluster *m* | 0 | 1 | 2 | 3 | 4 | 5 | 6 | 7 |
|---|---|---|---|---|---|---|---|---|
| $y_m$ | 0 | 1 | 0 | 0 | 0 | 1 | 0 | 0 |

Hence given a feasible binary string solution to the above QUBO formulation allows to deduce the product flow information, i.e., which product user is assigned to which distribution cluster, as well as the distribution cluster center geolocations. An illustration of a possible bitstring solution is also showed in the lower part of Fig. 10, for 4 cluster center geolocations, with $y_m$ Mid-size circles acting as distribution cluster center geolocations and $x_m^c$ as assignment of each to a specific distribution clusters.

In the above example, the product distribution cluster center was constrained to be located at a geolocation of a product user. However, in other examples, the product distribution cluster center can also be located without being constraint to a geolocation of a product user, or by being constraint to other locations, for example, locations of existing product distribution facilities.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of a user request, the determining of a distribution cluster, the generating of control data, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit.

Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a method for assisting in controlling a product flow. A user geolocations and production site geolocations are received. Quantum computer control data for controlling a quantum computer is generated for performing a quantum computation for the determination of product distribution clusters based on the user geolocations and the production site geolocations. A product distribution cluster represents a cluster of product users associated with a product producer of a product. A result of the quantum computation is received and the product distribution clusters are generated based on the result. The generated product distribution clusters are provided for assisting in controlling a product flow from a product producer to a product user.

**Claims**

1.  Computer implemented method (920) for assisting in controlling and/or monitoring a product flow of a product from a product producer (940) to a product user (944), wherein the method comprises:

    receiving product user geolocations and production site geolocations for a product, wherein the production site geolocation are indicative of the geographical locations of one or more production sites associated with a product producer producing the product and the product user geolocations are indicative of the geographical locations of one or more product users,
    generating quantum computer control data for controlling a quantum computer (930) for performing a quantum computation for the determination of one or more product distribution clusters based on the product user geolocations and the production site geolocations, wherein a product distribution cluster represents a cluster of product users associated with a product producer of a product,
    receiving a result of the quantum computation and generating the one or more product distribution clusters based on the result, and
    providing the one or more generated product distribution clusters for assisting in controlling and/monitoring a product flow from a product producer to a product user.

2.  The method according to claim 1, wherein the quantum computer control data comprises at least a part of an optimisation problem, wherein the optimisation problem is defined to determine as optimization result the one or more product distribution clusters based on the user geolocations and the producer geolocations, wherein the quantum computer control data is configured to cause the quantum computer to perform a quantum computation of the optimization problem.

3.  The method according to any of claims 1 and 2, wherein the generation of the product distribution clusters is further based on one or more objectives associated with the product user geolocations and the product producer geolocations.

4.  The method according to claim 3 wherein an objective comprises determining a distance between product users based on the product user geolocations and minimizing the distance between product users associated with a product distribution cluster.

5. The method according to any of claims 3 and 4, wherein an objective refers to minimizing a total number of product distribution clusters.

6. The method according to any of claims 3 to 5, wherein an objective comprises determining distances between a) product producer geolocations and distribution cluster geolocations, and b) product user geolocations and product producer geolocations and minimizing a relation of the distances.

7. The method according to any of claims 3 to 6, wherein an objective refers to minimizing a distance between a product distribution cluster geolocation and product user geolocations of product users associated with the product distribution cluster.

8. The method according to any of claims 3 to 7, wherein an objective refers to associating product users with a product distribution cluster that are located in the same administrative region.

9. The method according to any of claims 3 to 8, wherein an objective refers to assigning a product user to exactly one distribution cluster.

10. The method according to any of claims 2 to 9, wherein the optimization problem comprises an interaction part, wherein the interaction part is indicative of a two-way or multi-way interaction between two or more variables of the optimization problem, wherein the quantum computer control data comprises the interaction part of the optimization problem.

11. The method according to any of claims 2 to 10, wherein the optimization problem comprises an influence part indicative of an influence on one or more variables of the optimization problem an influence parameter, wherein the quantum computer control data comprises the influence part of the optimization problem.

12. The method according to any of the preceding claims, wherein the method further comprises:

receiving a product request of a product user indicating a product to be provided to the product user and/or a product user geolocation,
determining for the product user a distribution cluster associated with the product user based on the product user geolocation, and
generating control data for controlling and/or monitoring a product flow from a product producer to the product user based on the determined distribution cluster and based on the user request.

13. A method for controlling and/or monitoring a product flow of a product from a production site (940) to a product user (944), wherein the apparatus comprises one or more processor for performing a method comprising:

receiving a product request of a product user indicating a product to be provided to the product user and a product user geolocation, wherein the product user geolocation is indicative of the geographical location of product user,
determining a product distribution cluster associated with the product user based on the product user geolocation and based on one or more product distribution clusters generated according to any of claims 1 to 12, and
generating control data for controlling and/or monitoring a product flow from a production site to the product user based on the determined distribution cluster.

14. Apparatus for assisting in controlling and/or monitoring a product flow of a product from a product producer (940) to a product user (944), wherein the apparatus comprises one or more processors configured for performing a method comprising:

receiving product user geolocations and production site geolocations for a product, wherein the production site geolocation are indicative of the geographical locations of one or more production sites producing the product and the product user geolocations are indicative of the geographical locations of one or more product users,
generating quantum computer control data for controlling a quantum computer (930) for performing a quantum computation for the determination of one or more product distribution clusters based on the product user geolocations and the production site geolocations, wherein a product distribution cluster represents a cluster of product users associated with a product producer of a product,
receiving a result of the quantum computation and generating the one or more product distribution clusters based on the result, and
providing the one or more generated product distribution clusters for assisting in controlling and/monitoring a product flow from a product producer to a product user.

15. A computer program product for assisting in controlling and/or monitoring a product flow of a product from a product producer (940) to a product user (944), wherein the computer program product causes an apparatus according to claim 14 to perform the method according to any of claims 1 to 12 when carried out on the apparatus.

# FIG.1

$|X>$

$|0>$

$\frac{|0>+|1>}{\sqrt{2}}$

$|1>$

# FIG.2

100

| 106 | 108 |

| 104 |

# FIG.3

FIG.4

FIG.5

FIG.6

624

626

628

624

# FIG.7

Quantum annealer hardware

Input problem

Output problem

Classical computer

Problem translation/ operation control

Measurement control/ measurement translation

Quantum elements

Quantum govenor

Quantum annealer

# FIG.8

# FIG.9

910

900

provide

920

receive producer
geolocations and
user geolocations

determine
distribution cluster
center
geolocations

quantum computer

computing
optimization
problem

930

generate
control/
monitoring
data

940

control

941    944

942

# FIG.10

# FIG.11

Geographical locations of users and producers

QUBO formulation with an initial low value of $\rho$

Classical software layer to embed the QUBO on Quantum Computer

Icrement value of $\rho$

Run the algorithm on Quantum Computer

$E\rho \leq \varepsilon$

YES

NO

Classical software layer to interpret the result

Store the solution in the database for product flow control

| | Europäisches Patentamt<br>European Patent Office<br>Office européen des brevets | **EUROPEAN SEARCH REPORT** | **Application Number**<br>EP 24 19 7414 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ciacco Alessia ET AL: "Quantum Annealing for the two-level Facility Location Problem",<br>,<br>15 July 2024 (2024-07-15), pages 1-16, XP093241171,<br>Retrieved from the Internet:<br>URL:https://optimization-online.org/wp-content/uploads/2024/07/Manuscript_Optimization-Online-2.pdf<br>[retrieved on 2025-01-21]<br>* page 2 - page 9 *<br>----- | 1-15 | INV.<br>G06Q10/0631<br>G06Q30/0204<br>G06Q10/047 |
| A | WO 2023/222473 A1 (BASF SE [DE])<br>23 November 2023 (2023-11-23)<br>* the whole document *<br>----- | 1-15 | |
| A | FRANK PHILLIPSON: "Quantum Computing in Logistics and Supply Chain Management - an Overview",<br>ARXIV.ORG, CORNELL UNIVERSITY LIBRARY, 201 OLIN LIBRARY CORNELL UNIVERSITY ITHACA, NY 14853,<br>27 February 2024 (2024-02-27),<br>XP091689018,<br>* the whole document *<br>----- | 1-15 | |

TECHNICAL FIELDS SEARCHED (IPC)

G06Q
G06N

The present search report has been drawn up for all claims

| Place of search | Date of completion of the search | Examiner |
|---|---|---|
| Munich | 21 January 2025 | Kletti, Till |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7414

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | Publication date | Patent family member(s) | Publication date |
|---|---|---|---|
| WO 2023222473 A1 | 23-11-2023 | CN 119234234 A | 31-12-2024 |
| | | WO 2023222473 A1 | 23-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3830867 A1
- EP 3449427 A1
- US 2020272925 A1
- CN 212061223 U
- US 2019019099 A1
- EP 3092607 A1

**Non-patent literature cited in the description**

- **M. A. NIELSEN** ; **I. L. CHUANG**. *Quantum Computation and Quantum Information*, 2010